# EUROPÄISCHE PATENTSCHRIFT

(11) **EP 2 477 853 B1**
(45) Veröffentlichungstag und Bekanntmachung des Hinweises auf die Patenterteilung: **27.05.2015**
(21) Anmeldenummer: 10737049.6
(22) Anmeldetag: 27.07.2010
(51) Int. Cl.: B60S 1/38

(54) **WISCHBLATT IN FLACHBALKENBAUWEISE**
WIPER BLADE DESIGNED AS A FLAT BAR
BALAI D'ESSUIE-GLACE À STRUCTURE EN FORME DE BARRE PLATE

(30) Priorität: 14.09.2009 DE 102009029432
(43) Veröffentlichungstag der Anmeldung: 25.07.2012
(73) Patentinhaber: Robert Bosch GmbH, 70442 Stuttgart (DE)
(72) Erfinder: OP'T ROODT, Inigo, B-3500 Hasselt (BE); BONROY, Jan, B-3001 Heverlee (BE)
(86) Internationale Anmeldenummer: PCT/EP2010/060841
(87) Internationale Veröffentlichungsnummer: WO 2011/029660

(56) Entgegenhaltungen:
- EP-A1- 1 627 787
- EP-A2- 2 123 524
- WO-A1-2008/069464
- DE-A1- 10 000 373
- DE-A1-102005 062 462
- FR-A1- 2 905 650
- FR-A1- 2 920 729
- FR-A1- 2 928 887

## Beschreibung

### Stand der Technik

Die Erfindung geht von einem Wischblatt in Flachbalkenbauweise nach dem Oberbegriff des Anspruchs 1 aus.

Aus der DE 10 2005 062 462 A1 ist ein gattungsgemäßes Wischblatt bekannt, bei dem eine Wischleiste an ihrer Kopfleiste durch Halteprofile eines Wischleistenträgers gehalten wird. Die im Querschnitt L-förmigen Halteprofile greifen in Längsnuten der Kopfleiste ein. Auf der der Wischleiste abgewandten Seite besitzt der Wischleistenträger einen Längskanal zur Aufnahme einer flachen, im Querschnitt rechteckigen Federschiene, die als Tragelement dient. Eine Deckwand des Längskanals springt an den Längsseiten über die Seitenwände des Längskanals vor und bietet für ein Spoilerprofil eine Anlagefläche. Das Spoilerprofil wird durch im Querschnitt L-förmige Führungsschienen gehalten, die an der Deckwand nach außen vorstehend angeformt sind, wobei der freie Schenkel etwa parallel zur Deckwand verläuft.

Aus der WO 2008 069464 A1 ist ebenfalls ein gattungsgemäßes Wischblatt in Flachbalkenbauweise bekannt. Das Wischblatt weist eine Wischleiste auf, deren Kopfleiste von seitlichen Halteprofilen eines Wischleistenträgers gehalten wird, die in Längsnuten der Kopfleiste eingreifen. Der Wischleistenträger weist auf der der Kopfleiste abgewandten Seite einen ersten Längskanal zur Aufnahme eines Tragelements mit einem flachen, im Wesentlichen quer zur Wischleiste verlaufenden Querschnitt auf. Der erste Längskanal steht mit Randbereichen seitlich über die Kopfleiste vor. Der Wischleistenträger besitzt an einem Ende in den über die Kopfleiste seitlich vorstehenden Randbereichen in dessen Seitenwänden des ersten Längskanals nach außen offene Aussparungen, in die Nocken einer Endkappe eingreifen.

Die Spoilerprofile reichen nicht bis zum Ende der Wischleiste bzw. des Wischleistenträgers. In dem vorstehenden Teil des Wischleistenträgers sind in den seitlichen Vorsprüngen der Deckwand des Längskanals Aussparungen vorgesehen, die zur Sicherung von Endkappen dienen, die die Enden des Wischleistenträgers abdecken und bei der Montage mit innen liegenden Nocken in die Aussparungen einrasten. Bei einem anderen Ausführungsbeispiel des bekannten Wischblatts ist das Spoilerprofil an dem Wischleistenträger in einem Mehrstoff-Extrusionsverfahren angeformt. Die Wischleiste und das Tragelement ragen ein Stück weit aus dem Wischleistenträger heraus. In diesem Bereich besitzt die als Tragelement dienende Federschiene seitliche Aussparungen zum Fixieren einer Endkappe.

Der einstückig mit dem Spoilerprofil ausgebildete Wischleistenträger besitzt im Bereich des Spoilerprofils einen zweiten Längskanal, dessen Querschnitt der äußeren Kontur des Spoilerprofils angepasst ist und im Wesentlichen dreieckig ist.

### Offenbarung der Erfindung

Nach der Erfindung ist die Endkappe aus einem Endkappenunterteil und einem Endkappenoberteil zusammengesetzt, wobei das Endkappenunterteil mit im Querschnitt L-förmigen Führungsschienen, die an ihren zur Außenseite weisenden Stirnseiten durch eine Stirnwand miteinander verbunden sind, den ersten Längskanal von unten und an den Längsseiten umfasst und mit an seinen Innenseiten angeordneten Nocken in die zugeordneten Aussparungen des ersten Längskanals eingreift, während das Endkappenoberteil mit Nocken von der entgegengesetzten Seite in die Aussparungen des ersten Längskanals eingreift. Dadurch kann der Wischleistenträger schmal gehalten werden, wobei gleichzeitig eine einfache und sichere Fixierung der Endkappe gewährleistet ist. Zugleich wird die Relativbewegung des Tragelements relativ zum Wischleistenträger durch die Endkappen nicht behindert. Eine solche Relativbewegung ist erforderlich, damit der Wischleistenträger und das Tragelement sich ungezwungen unterschiedlichen Krümmungen einer Fahrzeugscheibe anpassen können. Ferner kann die Endkappe leicht montiert werden, indem das Endkappenunterteil von der Wischleistenseite an den Wischleistenträger angesetzt wird, während das Endkappenoberteil von der anderen Seite auf den Wischleistenträger aufgesetzt wird. Hierbei ist es zweckmäßig, wenn das Endkappenunterteil an seinem nach außen weisenden Ende seitliche Vorsprünge aufweist, an denen das Endkappenoberteil durch Vorsprünge der Seitenwände in Längsrichtung fixiert ist, und dass das Endkappenoberteil mit seinen Seitenwänden das Endkappenunterteil teilweise umfasst und mit Rastkanten an entsprechenden Aussparungen des

Endkappenunterteils verrastet. Die so sich ergebende Clipverbindung kann bei der Demontage leicht mit einem Werkzeug gelöst werden.

Gemäß einer weiteren Ausgestaltung der Erfindung ist die Endkappe aus einem Kappenteil und einem Fixierteil zusammengesetzt. Das Fixierteil besitzt zwei in Längsrichtung verlaufende, im Querschnitt L-förmige Führungsschenkel, die an ihren nach außen weisenden Stirnseiten durch eine Querstrebe miteinander verbunden sind und den ersten Längskanal von oben und seitlich umfassen. Dabei greifen an den Innenseiten der Führungsschenkel vorgesehene Nocken in die Aussparungen des ersten Längskanals ein. Danach wird das Kappenteil mit seinen Führungsprofilen in Längsrichtung über das Fixierteil geschoben, wobei die Führungsprofile die Randbereiche des ersten Längskanals und das Fixierteil seitlich von oben und von unten umfassen und das Kappenteil mittels an seiner Innenseite angeordneter Nocken an Ausnehmungen an der Außenseite des Fixierteils in Längsrichtung verrastet.

Der Wischleistenträger kann ohne Spoilerprofil gefertigt werden. In der Regel ist es jedoch zweckmäßig, an dem Wischleistenträger auf der der Wischleiste abgewandten Seite ein Spoilerprofil anzuformen. In dem Bereich des Spoilerprofils wird aus Gewichts- und Materialersparnis ein zweiter Längskanal vorgesehen, der einen im Wesentlichen dreieckigen Querschnitt aufweist und der äußeren Kontur des Spoilerprofils angepasst ist. Bei einem Wischleistenträger mit einem Spoilerprofil ist es gemäß einer weiteren Ausgestaltung der Erfindung zweckmäßig, dass der Wischleistenträger bis zur Stirnwand der Endkappe geführt ist und sein Spoilerpröfil ein Durchgangsloch zum Befestigen der Endkappe hat. Dieses Durchgangsloch wirkt mit einem korrespondierenden Durchgangsloch in dem Spoilerprofil der Endkappe zusammen, wobei ein Fixierstutzen durch die Durchgangslöcher gesteckt wird. In einfacher Weise ist der Fixierstutzen an einer Innenseite eines Schenkels einer Fixierklammer angeformt. Diese wird bei der Montage elastisch aufgebogen und vom Scheitel des Spoilerprofils im Bereich der Durchgangslöcher über die Endkappe geschoben, bis der Fixierstutzen in die Durchgangslöcher einrastet.

Gemäß einer Ausgestaltung besitzt der Fixierstutzen an seinem freien Ende einen Druckknopf, der durch eine Öffnung im anderen Schenkel der Fixierklammer ragt und mit einem Rand am Umfang des Druckknopfes mit Rastnasen an der Innenseite der Öffnung des anderen Schenkels verrastet. Dadurch wird gewährleistet, dass sich die Fixierklammer nicht selbstständig lösen kann, und die Endkappe sicher mit dem Wischleistenträger verbunden ist. Aus Design- und Strömungsgründen ist die Fixierklammer in einer Nische der Endkappe untergebracht, die der Form der Fixierklammer angepasst ist. Dabei ist es zweckmäßig, dass die Rastnasen, mit denen der Rand des Druckknopfs verrastet, soweit nach innen versetzt sind, dass der Druckknopf etwa bündig mit der Oberfläche der Fixierklammer abschließt.

Gemäß einer weiteren Ausgestaltung der Erfindung wird vorgeschlagen, dass bei einem Wischblatt mit einem Spoilerprofil und einem zweiten Längskanal im Bereich des Spoilerprofils der Wischleistenträger bis zur Stirnwand der Endkappe geführt ist, die einen nach innen gerichteten, in Längsrichtung verlaufenden Fixierdorn trägt, der in den zweiten Längskanal des Wischleistenträgers eingepresst wird. Hierzu ist es zweckmäßig, dass der Fixierdorn im Querschnitt dem zweiten Längskanal angepasst ist und sich zum freien Ende hin konisch verjüngt. Die Erfindung bezieht sich nicht nur auf ein Wischblatt in Kombination mit einer Endkappe sondern betrifft ebenfalls die Endkappen an sich, die für die Verwendung an einem erfindungsgemäßen Wischblatt besondere Merkmale aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenpassen

Es zeigen:
Fig. 1 eine perspektivische Teilansicht eines Endes eines erfindungsgemäßen Wischblatts während der Montage eines Tragelements,
Fig. 2 einen Schnitt entsprechend der Linie II-II in Fig. 1,
Fig. 3 eine Variante zur Fig. 2,
Fig. 4 eine perspektivische Teilansicht nach Fig. 1 während der Montage eines Endkappenunterteils,
Fig. 5 eine perspektivische Teilansicht nach Fig. 4 während der Montage eines Endkappenoberteils,
Fig. 6 eine perspektivische Ansicht eines Endkappenoberteils von unten und eines zugeordneten Endkappenunterteils von unten,
Fig. 7 eine perspektivische Teilansicht eines Wischblattendes während der Montage eines Fixierteils,
Fig. 8 eine perspektivische Teilansicht nach Fig. 7 während der Montage eines zugeordneten Kappenteils,

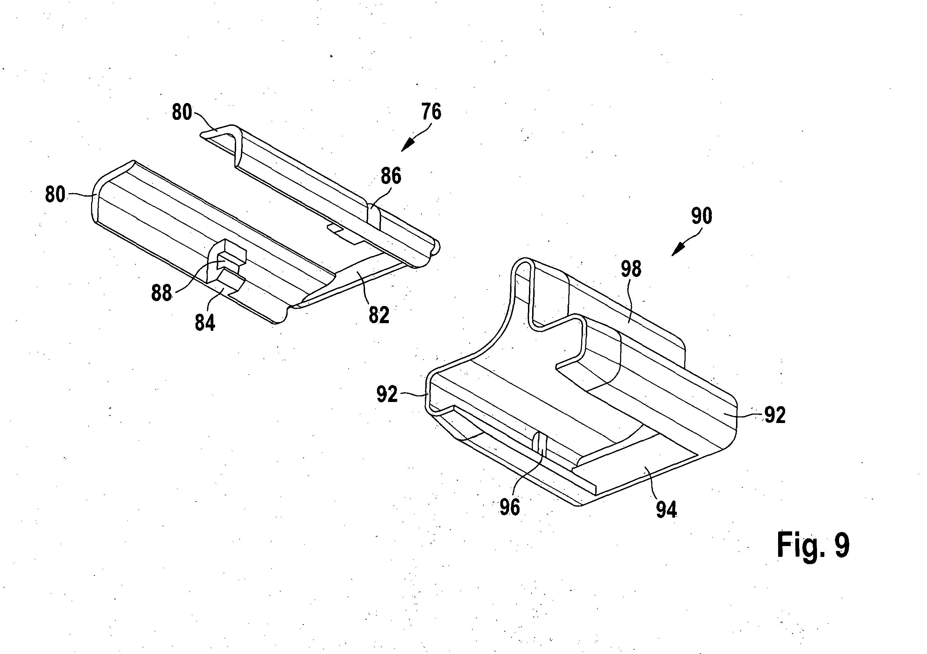

Fig. 9 eine perspektivische Ansicht eines Kappenteils und eines zugeordneten Fixierteils von unten,
Fig. 10 eine Variante zur Fig. 1,
Fig. 11 eine perspektivische Teilansicht eines Wischblattendes mit einer Kappe als Variante zur Fig. 8,
Fig. 12 einen Schnitt entsprechend der Linie XII- XII in Fig. 11 und
Fig. 13 eine perspektivische Ansicht einer Kappe als Variante zur Fig. 11 während der Montage an einem im Querschnitt dargestellten Wischblattende.

Ein Wischblatt 10 umfasst im Wesentlichen eine Wischleiste 12, die von einem Wischleistenträger 22 gehalten wird. An diesem ist im mittleren Bereich ein nicht dargestelltes Anschlusselement befestigt, über das das Wischblatt 10 mit einem nicht dargestellten Wischarm eines Scheibenwischers gelenkig verbunden werden kann.

Die Wischleiste 12 besitzt eine Wischlippe 14, die über einen Kippsteg 16 mit einer Kopfleiste 20 verbunden ist. Zwischen der Wischlippe 14 und der Kopfleiste 20 ist zu beiden Seiten des Kippstegs 16 jeweils eine Stützleiste 18 vorgesehen, an der sich das breite Ende der im Querschnitt keilförmigen Wischlippe 14 während einer Wischbewegung des Wischblatts 10 abstützt. Die Kopfleiste 20 besitzt an ihren Längsseiten Längsnuten 34, in die Halteprofile 32 des Wischleistenträgers 22 eingreifen. Die Halteprofile 32 besitzen einen L-förmigen Querschnitt, wobei der am Wischleistenträger 22 angeformte Schenkel etwa parallel zum Kippsteg 16 verläuft, während der freie Schenkel um 90° nach innen abgewinkelt ist.

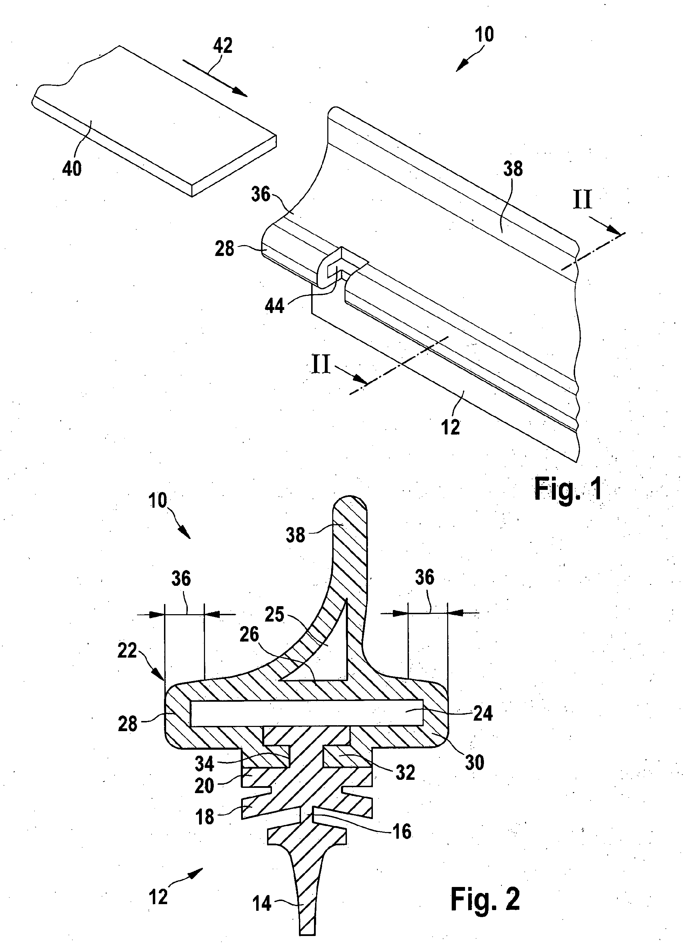

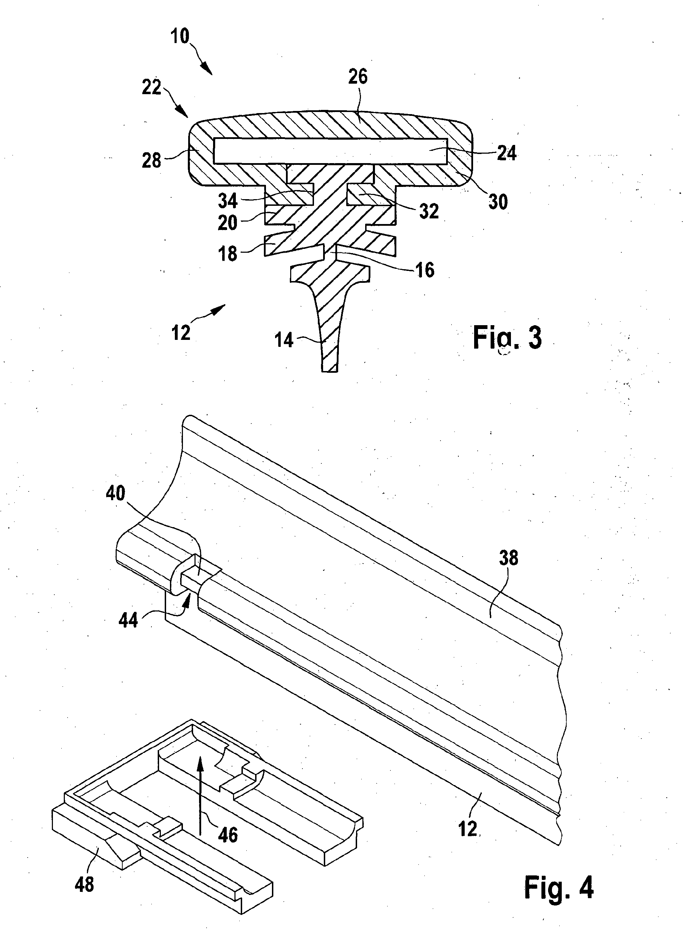

Auf der der Wischleiste 12 abgewandten Seite besitzt der Wischleistenträger 22 einen ersten Längskanal 24, der von einem Boden 30, an dem die Halteprofile 32 angeformt sind, zwei Seitenwänden 28 und einer Deckwand 26 gebildet wird. Der erste Längskanal 24 dient zur Aufnahme einer als Tragelement 40 dienenden Federschiene, die einen flachen rechteckigen Querschnitt aufweist, wobei die langen Seiten des Rechtecks etwa senkrecht zum Kippsteg 16 verlaufen. Der erste Längskanal 24 steht an beiden Längsseiten über die Halteprofile 32 und die Breite der Kopfleiste 20 vor, sodass in einem Randbereich 36 an jeder Längsseite eine Endkappe 48, 50 geführt werden kann. Fig. 3 zeigt ein Wischblatt 10 in einer Ausführung ohne ein Spoilerprofil, während das Wischblatt 10 nach der Ausführung in Fig. 2 ein Spoilerprofil 38 aufweist, das an der Deckwand 26 des ersten Längskanals 24 des Wischleistenträgers 22 angeformt ist. Entsprechend sind die Endkappen 48, 50 bzw.76, 90 der äußeren Kontur des jeweiligen Wischleistenträgers 22 angepasst.

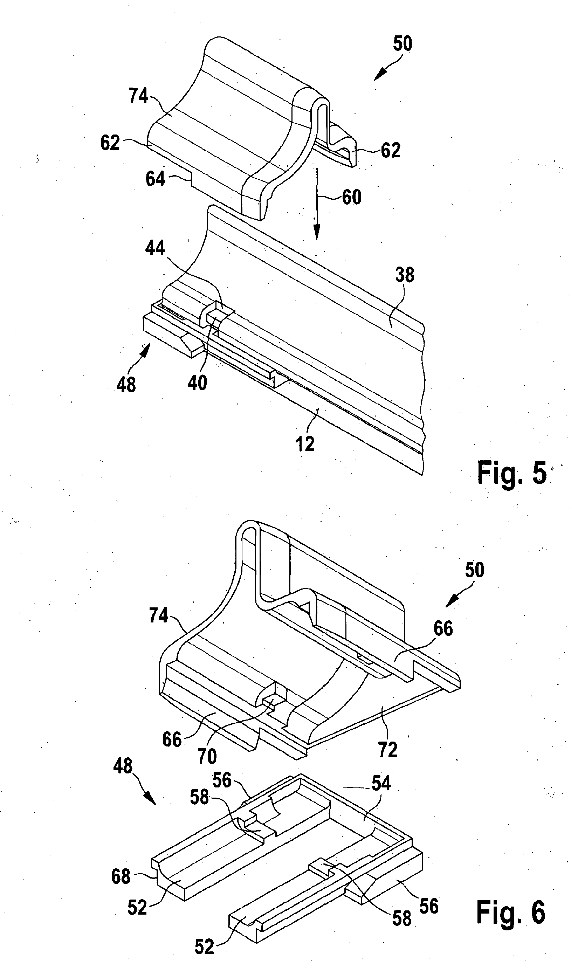

Die Endkappe in der Ausführung nach Fig. 4 bis Fig. 6 ist aus einem Endkappenunterteil 48 und einem Endkappenoberteil 50 zusammengesetzt. Das Endkappenunterteil 48 besitzt zwei im Querschnitt L-förmige Führungsschienen 52, die an ihren nach außen weisenden Stirnseiten durch eine Stirnwand 54 miteinander verbunden sind. An den Innenseiten der Schenkel der Führungsschienen 52 sind Nocken 58 vorgesehen, die in seitliche Aussparungen 44 des ersten Längskanals 24 des Wischleistenträgers 22 passen. An den Außenseiten der Führungsschienen 52 sind an dem Ende mit der Stirnwand 54 Vorsprünge 56 angeordnet. Diese dienen zur Sicherung des Endkappenoberteils 50 in Längsrichtung, indem Vorsprünge 64 an den Seitenwänden 62 des Endkappenoberteils 50 nach der Montage an Stirnseiten der Vorsprünge 56 des Endkappenunterteils 48 anliegen.

Bei der Montage wird zunächst das Tragelement 40 in Montagerichtung 42 in den ersten Längskanal 24 geschoben. Danach wird das Endkappenunterteil 48 von der Seite der Wischleiste 12 in Montagerichtung 46 mit seinen Führungsschienen 52 an den Boden 30 des ersten Längskanals 24 angelegt, wobei die Nocken 58 des Endkappenunterteils 48 in die Aussparungen 44 des ersten Längskanals 24 eingreifen. Danach wird das Endkappenoberfeil 50 in Montagerichtung 60 von der Deckwand 26 aus auf den ersten Längskanal 24 gesetzt, sodass seine Deckwand 74 in den Randbereichen 36 auf der Deckwand 26 des ersten Längskanals 24 liegen. Dabei stoßen die Vorsprünge 64 des Endkappenoberteils 50 an den Vorsprüngen 56 des Endkappenunterteils 48 in Längsrichtung an. Gleichzeitig rasten Rastkanten 66 an den Seitenwänden 62 des Endkappenoberteils 50 in entsprechende Aussparungen 68 an den Führungsschienen 52 des Endkappenunterteils 48 ein. Das Endkappenoberteil 50 hat an seiner Innenseite Nocken 70, die im montierten Zustand in entgegengesetzter Richtung zu den Nocken 58 des Endkappenunterteils 48 in die Aussparungen 44 eingreifen. Dadurch entsteht eine sichere, leicht zu montierende Verbindung zwischen der Endkappe 48, 50 und dem Wischleistenträger 22. Wenn dieser ein Spoilerprofil 38 aufweist, ist das innere Querschnittprofil des Endkappenoberteils 50 der Außenkontur des Wischleistenträgers 22 mit seinem Spoilerprofil 38 angepasst, sodass das Endkappenoberteil 50 den Wischleistenträger 22 überlappt, bis eine Stirnwand 72 des Endkappenoberteils 50 und die Stirnwand 54 des Endkappenunterteils 48 an der zugeordneten Stirnseite des Wischleistenträgers 22 anliegen.

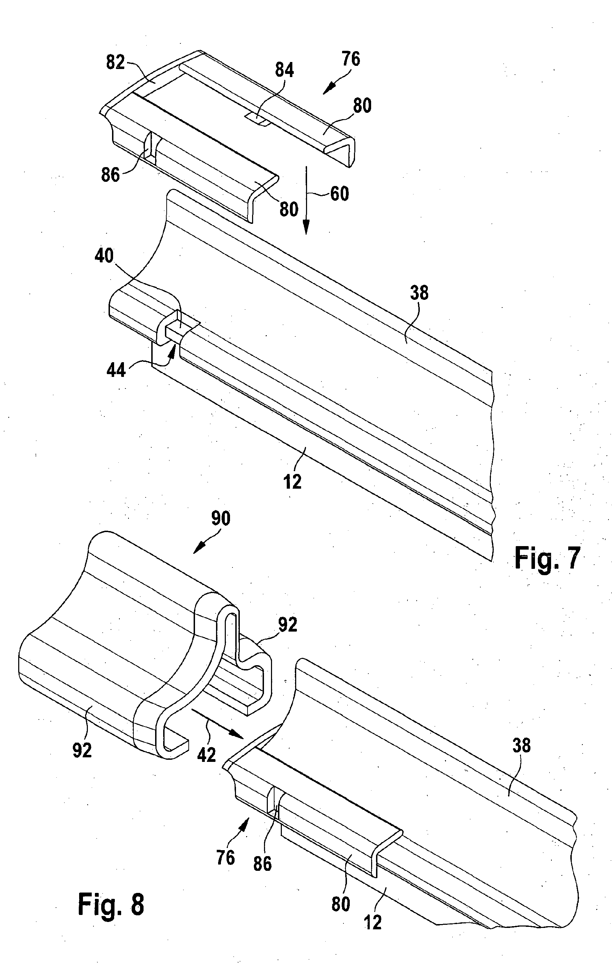

Bei der Ausführung nach Fig. 7 und Fig. 8 ist die Endkappe aus einem Kappenteil 90 und einem Fixierteil 76 zusammengesetzt. Das Fixierteil 76 besitzt zwei Führungsschenkel 8C die an ihren nach außen weisenden Stirnseiten durch eine Querstrebe 82 miteinander verbunden sind. An den Innenseiten der im Querschnitt L-förmigen Führungsschenkel 80 befinden sich Nocken 84, die in die Aussparungen 44 des ersten Längskanals 24 passen. Die Nocken 84 können in Längsrichtung jeweils eine Nut 88 besitzen, in die das Tragelement 40 mit Spiel eingesetzt ist. Bei der Montage wird zunächst das Fixierteil 76 in Montagerichtung 60 von der Deckwand 26 des Wischleistenträgers 22 in den Randbereich 36 auf die Deckwand 26 des Wischleistenträgers 22 gesetzt, sodass die Nocken 84 in die Aussparungen 44 des ersten Längskanals 24 eingreifen. Danach wird das Kappenteil 90 mit seinen seitlichen im Querschnitt u-förmigen Führungsprofilen 92 in Montagerichtung 42 entsprechend der Längsrichtung des Wischblatts 10 über das Fixierteil 76 geschoben, bis Nocken 96 an der Innenseite der Führungsprofile 92 in entsprechende Ausnehmungen 86 an den Außenseiten der Führungsschenkel 80 des Fixierteils 76 einrasten. Dabei liegt eine Stirnwand 94 am äußeren Ende des Kappenteils 90 an der entsprechenden Stirnseite des Wischleistenträgers 22 an.

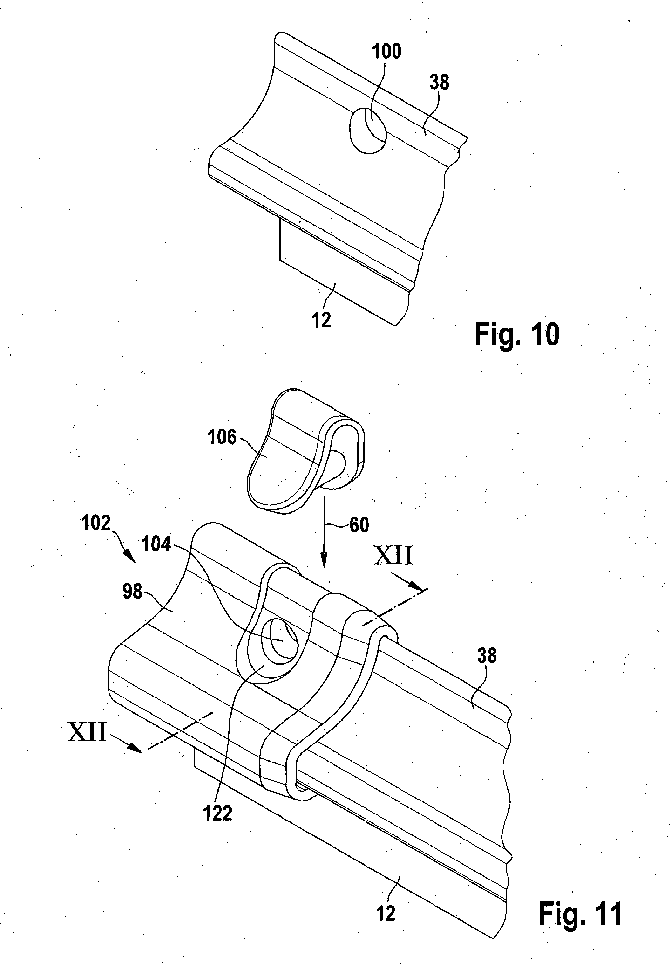

Bei der Ausführung nach Fig. 10 bis Fig. 12 besitzt das Spoilerprofil 38 des Wischleistenträgers 22 ein Durchgangsloch 100, dem ein Durchgangsloch 104 einer Endkappe 102 entspricht. Diese besitzt an ihren Längsseiten Führungsprofile 92, die die äußere Kontur des ersten Längskanals 24 von unten, von den Längsseiten und von oben mindestens im Randbereich 36 umfassen. Bei der Montage wird die Endkappe 102 in Längsrichtung auf den Wischleistenträger 22 mit seinem Spoilerprofil 38 geschoben, bis die Stirnwand 94 der Endkappe 102 an der Stirnseite des Wischleistenträgers 22 anliegt und die Durchgangslöcher 100 und 104 miteinander fluchten. Nun wird eine Fixierklammer 106 in Montagerichtung 60 auf das Spoilerprofil 98 der Endkappe 102 gesetzt, in dem ihre Schenkel 108, 110 elastisch aufgebogen werden. Die Fixierklammer 106 besitzt an der Innenseite des Schenkels 108 einen angeformten Fixierstutzen 112, der nach der Montage durch die Durchgangslöcher 100, 104 greift. An seinem freien Ende befindet sich ein Druckknopf 114, der durch eine Öffnung 120 in dem anderen Schenkel 110 der Fixierklammer 106 reicht und mit der Außenkontur der Fixierklammer 106 etwa bündig abschließt. In der montierten Endlage verrastet der am Umfang vorstehende Rand 116 des Druckknopfs 114 mit Rastnasen 118, die an der Innenseite der Öffnung 120 vorgesehen sind. Die Fixierklammer 106 ist in eine Nische 122 der Endkappe 102 eingelassen. Sie schließt somit annähernd bündig mit der Außenkontur der Endkappe 102 ab.

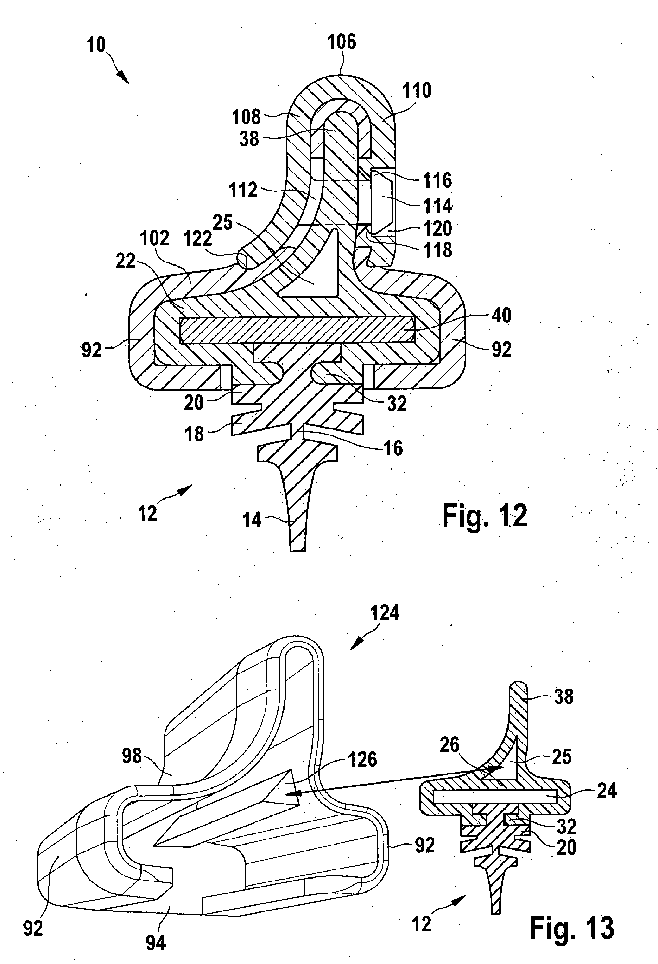

Bei der Ausführung nach Fig. 13 besitzt eine Endkappe 124 an ihrer äußeren Stirnwand 94 einen in Längsrichtung nach innen gerichteten Fixierdorn 126, der in einen zweiten Längskanal 25 passt, der im Bereich des Spoilerprofils 38 des Wischleistenträgers 22 vorgesehen ist. Der zweite Längskanal 25 hat eine etwa dreieckige Querschnittsform und ist im Wesentlichen der Außenkontur des Spoilerprofils 38 angepasst. Bei der Montage wird der Fixierdorn 126 in den zweiten Längskanal 25 gepresst. Zur leichteren Montage verjüngt sich der Fixierdorn 126, der zweckmäßigerweise dem Querschnitt des zweiten Längskanals 25 angepasst ist, konisch zum freien Ende hin. Der Fixierdorn 126 kann eine raue oder schuppige Oberflächenstruktur besitzen, um die Haftung in den zweiten Längskanal 25 zu verbessern.

Allen Endkappen ist gemeinsam, dass sie durch ihre Befestigung am Wischleistenträger 22 die erforderliche Relativbewegung zwischen dem Wischleistenträger 22 und dem Tragelement 40 nicht behindern.

## Patentansprüche

1. Wischblatt in Flachbalkenbauweise (10) mit einer Wischleiste (12), deren Kopfleiste (20) von seitlichen Halteprofilen (32) eines Wischleistenträgers (22) gehalten wird, die in Längsnuten (34) der Kopfleiste (20) eingreifen, wobei der Wischleistenträger (22) auf der der Kopfleiste (20) abgewandten Seite mindestens einen ersten Längskanal (24) zur Aufnahme eines Tragelements (40) mit einem flachen, im Wesentlichen quer zur Wischleiste (12) verlaufenden Querschnitt aufweist und der erste Längskanal (24) mit Randbereichen (36) seitlich über die Kopfleiste (20) vorsteht, wobei der Wischleistenträger (22) mindestens an einem Ende in den über die Kopfleiste (20) seitlich vorstehenden Randbereichen (36) in dessen Seitenwänden (28) des ersten Längskanals (24) nach außen offene Aussparungen (44) besitzt, in die Nocken (58) einer Endkappe (48, 50) eingreifen, **dadurch gekennzeichnet, dass** die Endkappe aus einem Endkappenunterteil (48) und einem Endkappenoberteil (50) zusammengesetzt ist, wobei das Endkappenunterteil (48) mit im Querschnitt L-förmigen Führungsschienen (52), die an ihren zur Außenseite weisenden Stirnseiten durch eine Stirnwand (54) miteinander verbunden sind, den ersten Längskanal (24) von unten und an den Längsseiten umfasst und mit an seinen Innenseiten angeordneten Nocken (58) in die zugeordneten Aussparungen (44) des ersten Längskanals (24) eingreift, während das Endkappenoberteil (50) mit Nocken (70) von der entgegengesetzten Seite in die Aussparungen (44) des ersten Längskanals (24) eingreift.

2. Wischblatt (10) nach Anspruch 1, **dadurch gekennzeichnet, dass** das Endkappenunterteil (48) an seinem nach außen weisenden Ende seitliche Vorsprünge (56) aufweist, an denen das Endkappenoberteil (50) durch Vorsprünge (64) der Seitenwände (62) in Längsrichtung fixiert ist, und dass das Endkappenoberteil (50) mit seinen Seitenwänden (62) das Endkappenunterteil (48) teilweise seitlich umfasst und mit Rastkanten (66) an entsprechenden Aussparungen (68) des Endkappenunterteils (48) verrastet.

3. Wischblatt (10) nach Anspruch 1, **dadurch gekennzeichnet, dass** die Endkappe aus einem Kappenteil (90) und einem Fixierteil (76) zusammengesetzt ist und das Fixierteil (76) zwei in Längsrichtung verlaufende, im Querschnitt L-förmige Führungsschenkel (80) besitzt, die an ihrer nach außen weisenden Stirnseite durch eine Querstrebe (82) miteinander verbunden sind und den ersten Längskanal (24) von oben und seitlich umfassen, wobei an den Innenseiten der Führungsschenkel (80) vorgesehene Nocken (84) in die Aussparungen (44) des ersten Längskanals (24) eingreifen und das mit seinen Führungsprofilen (92) in Längsrichtung über das Fixierteil (76) geschobene Kappenteil (90) an einer Ausnehmung (86) an der Außenseite des Fixierteils (76) in Längsrichtung verrastet.

4. Wischblatt (10) nach einem der vorhergehenden Ansprüche, **dadurch gekennzeichnet, dass** an dem Wischleistenträger (22) auf der der Wischleiste (12) abgewandten Seite ein Spoilerprofil (38) angeformt ist.

5. Wischblatt (10) nach Anspruch 4, **dadurch gekennzeichnet, dass** der Wischleistenträger (22) im Bereich des Spoilerprofils (38) einen zweiten Längskanal (25) besitzt, der einen im Wesentlichen dreieckigen Querschnitt aufweist.

6. Endkappe (48, 50; 76, 90), die für die Verwendung bei einem Wischblatt (10) nach einem der Ansprüche 1 bis 5 geeignet ist, wobei das
Wischblatt in Flachbalkenbauweise (10) mit einer Wischleiste (12), deren Kopfleiste (20) von seitlichen Halteprofilen (32) eines Wischleistenträgers (22) gehalten wird, die in Längsnuten (34) der Kopfleiste (20) eingreifen, wobei der Wischleistenträger (22) auf der der Kopfleiste (20) abgewandten Seite mindestens einen ersten Längskanal (24) zur Aufnahme eines Tragelements (40) mit einem flachen, im Wesentlichen quer zur Wischleiste (12) verlaufenden Querschnitt aufweist und der erste Längskanal (24) mit Randbereichen (36) seitlich über die Kopfleiste (20) vorsteht, wobei der Wischleistenträger (22) mindestens an einem Ende in den über die Kopfleiste (20) seitlich vorstehenden Randbereichen (36) in dessen Seitenwänden (28) des ersten Längskanals (24) nach außen offene Aussparungen (44) besitzt, in die Nocken (58) der Endkappe (48, 50) eingreifen, **dadurch gekennzeichnet, dass** die Endkappe aus einem Endkappenunterteil (48) und einem Endkappenoberteil (50) zusammengesetzt ist, wobei das Endkappenunterteil (48) mit im Querschnitt L-förmigen Führungsschienen (52), die an ihren zur Außenseite weisenden Stirnseiten durch eine Stirnwand (54) miteinander verbunden sind, den ersten Längskanal (24) von unten und an den Längsseiten umfasst und mit an seinen Innenseiten angeordneten Nocken (58) in die zugeordneten Aussparungen (44) des ersten Längskanals (24) eingreift, während das Endkappenoberteil (50) mit Nocken (70) von der entgegengesetzten Seite in die Aussparungen (44) des ersten Längskanals (24) eingreift.

## Claims

1. Wiper blade designed as a flat bar (10) with a wiper strip (12), the top strip (20) of which is held by lateral retaining profiles (32) of a wiper strip carrier (22), which retaining profiles engage in longitudinal grooves (34) in the top strip (20), wherein the wiper strip carrier (22), on the side facing away from the top strip (20), has at least one first longitudinal channel (24) for receiving a supporting element (40) with a flat cross section running substantially transversely with respect to the wiper strip (12), and the first longitudinal channel (24) protrudes with edge regions (36) laterally over the top strip (20), wherein the wiper strip carrier (22), in the side walls (28) thereof of the first longitudinal channel (24), has, at least at one end, in the edge regions (36) protruding laterally over the top strip (20), cutouts (44) which are open outwards and in which cams (58) of an end cap (48, 50) engage, **characterized in that** the end cap is composed of an end cap lower part (48) and an end cap upper part (50), wherein the end cap lower part (48) surrounds the first longitudinal channel (24) from below and on the longitudinal sides by means of guide rails (52), which are L-shaped in cross section and are connected to each other on the end sides thereof pointing towards the outer side by means of an end wall (54), and engages in the associated cutouts (44) of the first longitudinal channel (24) by means of cams (58) arranged on the inner sides of said end cap lower part, while the end cap upper part (50) engages in the cutouts (44) of the first longitudinal channel (24) by means of cams (70) from the opposite side.

2. Wiper blade (10) according to Claim 1, **characterized in that** the end cap lower part (48) has, at the outwardly pointing end thereof, lateral projections (56) at which the end cap upper part (50) is fixed in the longitudinal direction by means of projections (64) of the side walls (62), and **in that** the end cap upper part (50), by means of the side walls (62) thereof, partially laterally surrounds the end cap lower part (48) and latches on corresponding cutouts (68) of the end cap lower part (48) by means of latching edges (66).

3. Wiper blade (10) according to Claim 1, **characterized in that** the end cap is composed of a cap part (90) and a fixing part (76), and the fixing part (76) has two guide limbs (80) which run in the longitudinal direction, are L-shaped in cross section, are connected to each other on the outwardly pointing end side thereof by means of a transverse strut (82) and surround the first longitudinal channel (24) from above and laterally, wherein cams (84) provided on the inner sides of the guide limbs (80) engage in the cutouts (44) of the first longitudinal channel (24) and the cap part (90) which is pushed by means of the guide profiles (92) thereof over the fixing part (76) in the longitudinal direction latches in the longitudinal direction at a recess (86) on the outer side of the fixing part (76).

4. Wiper blade (10) according to one of the preceding claims, **characterized in that** a spoiler profile (38) is integrally formed on the wiper strip carrier (22) on the side facing away from the wiper strip (12).

5. Wiper blade (10) according to Claim 4, **characterized in that** the wiper strip carrier (22) has, in the region of the spoiler profile (38), a second longitudinal channel (25) which has a substantially triangular cross section.

6. End cap (48, 50; 76, 90) which is suitable for use in a wiper blade (10) according to one of Claims 1 to 5, wherein the wiper blade designed as a flat bar (10) has a wiper strip (12), the top strip (20) of which is held by lateral retaining profiles (32) of a wiper strip carrier (22), which retaining profiles engage in longitudinal grooves (34) in the top strip (20), wherein the wiper strip carrier (22), on the side facing away from the top strip (20), has at least one first longitudinal channel (24) for receiving a supporting element (40) with a flat cross section running substantially transversely with respect to the wiper strip (12), and the first longitudinal channel (24) protrudes with edge regions (36) laterally over the top strip (20), wherein the wiper strip carrier (22), in the side walls (28) thereof of the first longitudinal channel (24), has, at least at one end, in the edge regions (36) protruding laterally over the top strip (20), cutouts (44) which are open outwards and in which cams (58) of the end cap (48, 50) engage, **characterized in that** the end cap is composed of an end cap lower part (48) and an end cap upper part (50), wherein the end cap lower part (48) surrounds the first longitudinal channel (24) from below and on the longitudinal sides by means of guide rails (52), which are L-shaped in cross section and are connected to each other on the end sides thereof pointing towards the outer side by means of an end wall (54), and engages in the associated cutouts (44) of the first longitudinal channel (24) by means of cams (58) arranged on the inner sides of said end cap lower part, while the end cap upper part (50) engages in the cutouts (44) of the first longitudinal channel (24) by means of cams (70) from the opposite side.

## Revendications

1. Balai d'essuie-glace à structure en forme de barre plate (10) comprenant une raclette de balai d'essuie-glace (12) dont la raclette de tête (20) est retenue par des profilés de retenue latéraux (32) d'un support de raclette de balai d'essuie-glace (22), lesquels profilés de retenue viennent en prise dans des rainures longitudinales (34) de la raclette de tête (20), le support de raclette de balai d'essuie-glace (22) comprenant, sur le côté opposé à la raclette de tête (20), au moins un premier canal longitudinal (24) pour la réception d'un élément de support (40) présentant une section transversale plate s'étendant essentiellement transversalement à la raclette de balai d'essuie-glace (12) et le premier canal longitudinal (24) faisant saillie latéralement au-delà de la raclette de tête (20) par des régions de bord (36), le support de raclette de balai d'essuie-glace (22) comprenant des évidements (44) ouverts vers l'extérieur au moins à une extrémité dans les régions de bord (36) faisant saillie latéralement au-delà de la raclette de tête (20) dans ses parois latérales (28) du premier canal longitudinal (24), dans lesquels évidements viennent en prise des ergots (58) d'un capuchon d'extrémité (48, 50), **caractérisé en ce que** le capuchon d'extrémité est composé d'une partie inférieure de capuchon d'extrémité (48) et d'une partie supérieure de capuchon d'extrémité (50), la partie inférieure de capuchon d'extrémité (48) entourant le premier canal longitudinal (24) par le bas et au niveau des côtés longitudinaux par des rails de guidage (52) en forme de L en section transversale qui sont reliés l'un à l'autre par une paroi frontale (54) au niveau de leurs côtés frontaux tournés vers le côté extérieur et venant en prise dans les évidements associés (44) du premier canal longitudinal (24) par des ergots (58) disposés sur ses côtés intérieurs, tandis que la partie supérieure de capuchon d'extrémité (50) vient en prise dans les évidements (44) du premier canal longitudinal (24) par des ergots (70) depuis le côté opposé.

2. Balai d'essuie-glace (10) selon la revendication 1, **caractérisé en ce que** la partie inférieure de capuchon d'extrémité (48) comprend, à son extrémité tournée vers l'extérieur, des saillies latérales (56) au niveau desquelles la partie supérieure de capuchon d'extrémité (50) est fixée dans la direction longitudinale par des saillies (64) des parois latérales (62), et **en ce que** la partie supérieure de capuchon d'extrémité (50) entoure latéralement partiellement la partie inférieure de capuchon d'extrémité (48) par ses parois latérales (62) et s'encliquète par des bords d'encliquetage (66) au niveau d'évidements correspondants (68) de la partie inférieure de capuchon d'extrémité (48).

3. Balai d'essuie-glace (10) selon la revendication 1, **caractérisé en ce que** le capuchon d'extrémité est composé d'une partie de capuchon (90) et d'une partie de fixation (76) et la partie de fixation (76) comporte deux branches de guidage (80) en forme de L en section transversale et s'étendant dans la direction longitudinale, lesquelles sont reliées l'une à l'autre par une traverse (82) au niveau de leur côté frontal tourné vers l'extérieur et entourent par le dessus et latéralement le premier canal longitudinal (24), des ergots (84) prévus sur les côtés intérieurs des branches de guidage (80) venant en prise dans les évidements (44) du premier canal longitudinal (24) et la partie de capuchon (90) poussée sur la partie de fixation (76) dans la direction longitudinale à l'aide de ses profilés de guidage (92) s'encliquetant dans la direction longitudinale au niveau d'un évidement (86) sur le côté extérieur de la partie de fixation (76).

4. Balai d'essuie-glace (10) selon l'une quelconque des revendications précédentes, **caractérisé en ce qu'**un profilé de déflecteur (38) est formé sur le support de raclette de balai d'essuie-glace (22) sur le côté opposé à la raclette de balai d'essuie-glace (12).

5. Balai d'essuie-glace (10) selon la revendication 4, **caractérisé en ce que** le support de raclette de balai d'essuie-glace (22) comporte, dans la région du profilé de déflecteur (38), un deuxième canal longitudinal (25) qui présente une section transversale essentiellement triangulaire.

6. Capuchon d'extrémité (48, 50 ; 76, 90), lequel est approprié pour l'utilisation dans un balai d'essuie-glace (10) selon l'une quelconque des revendications 1 à 5, le balai d'essuie-glace à structure en forme de barre plate (10) comprenant une raclette de balai d'essuie-glace (12) dont la raclette de tête (20) est retenue par des profilés de retenue latéraux (32) d'un support de raclette de balai d'essuie-glace (22), lesquels profilés de retenue viennent en prise dans des rainures longitudinales (34) de la raclette de tête (20), le support de raclette de balai d'essuie-glace (22) comprenant, sur le côté opposé à la raclette de tête (20), au moins un premier canal longitudinal (24) pour la réception d'un élément de support (40) présentant une section transversale plate s'étendant essentiellement transversalement à la raclette de balai d'essuie-glace (12) et le premier canal longitudinal (24) faisant saillie latéralement au-delà de la raclette de tête (20) par des régions de bord (36), le support de raclette de balai d'essuie-glace (22) comprenant des évidements (44) ouverts vers l'extérieur au moins à une extrémité dans les régions de bord (36) faisant saillie latéralement au-delà de la raclette de tête (20) dans ses parois latérales (28) du premier canal longitudinal (24), dans lesquels évidements viennent en prise des ergots (58) du capuchon d'extrémité (48, 50), **caractérisé en ce que** le capuchon d'extrémité est composé d'une partie inférieure de capuchon d'extrémité (48) et d'une partie supérieure de capuchon d'extrémité (50), la partie inférieure de capuchon d'extrémité (48) entourant le premier canal longitudinal (24) par le bas et au niveau des côtés longitudinaux par des rails de guidage (52) en forme de L en section transversale qui sont reliés l'un à l'autre par une paroi frontale (54) au niveau de leurs côtés frontaux tournés vers le côté extérieur et venant en prise dans les évidements associés (44) du premier canal longitudinal (24) par des ergots (58) disposés sur ses côtés intérieurs, tandis que la partie supérieure de capuchon d'extrémité (50) vient en prise dans les évidements (44) du premier canal longitudinal (24) par des ergots (70) depuis le côté opposé.
